(19) Europäisches Patentamt
European Patent Office
Office européen des brevets

(11) EP 2 743 288 A1

(12) **EUROPÄISCHE PATENTANMELDUNG**

(43) Veröffentlichungstag:
18.06.2014 Patentblatt 2014/25

(51) Int Cl.:
*C08G 73/02* *(2006.01)*

(21) Anmeldenummer: 12196731.9

(22) Anmeldetag: **12.12.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **BASF SE**
**67056 Ludwigshafen (DE)**

(72) Erfinder:
• **Hüffer, Stephan**
**67063 Ludwigshafen (DE)**
• **Kramer, Andreas**
**67159 Friedelsheim (DE)**
• **Dietsche, Frank**
**69198 Schriesheim (DE)**

(54) **Verfahren zur Herstellung chloridfreier Polyethylenimine**

(57) Verfahren zur Herstellung von Polyalkyleniminen aus Alkyleniminen in Gegenwart eines flüssigen Lö-sungsmittels und eines Katalysators, wobei die Herstel-lung halb-diskontinuierlich in einem Reaktionsbehälter erfolgt. Optional erfolgt die Herstellung in Gegenwart wei-terer Additive. Polyalkylenimine hergestellt nach solchen Verfahren und deren Formulierungen sind ebenfalls Ge-genstand der Erfindung, insbesondere solche mit einem geringen Anteil chloridhaltiger Verbindungen. Solche Po-lyalkylenimine haben Anwendungsbereiche im Bereich der Medizintechnik, Druckmittel, Abwasserbehandlung, Oberflächenbehandlung, Kosmetik, Waschmittel, Bio-technologie, Verpackungen, Elektronik, Papier, Bauche-mie, Textilien, Chromatographie, Ionentauscher, Ölin-dustrie, Keramiken, Glass, Membrantechnologie, Kata-lysatoren, Galvanoanwendungen, Biozide oder Holz-schutz. Weiterhin kommen Anwendungen als Korrosi-onsinhibitor, Dispergator, Additiv in Ölen, zur Formulierung von Pharmaka, Haarpflegemitteln, Duftstoffen und Aromen, zur Herstellung von Genvektoren, zur Funktionalisierung und Modifizierung von Oberflächen in der Galvano- und Medizintechnik oder zur Herstellung von Reinigungssystemen für die Halbleiterindustrie und Li-thiumbatterien in Frage.

EP 2 743 288 A1

**Beschreibung**

Die vorliegende Erfindung betrifft Verfahren zur Herstellung von Polyalkyleniminen aus Alkyleniminen. Weiterhin betrifft die Erfindung auch bestimmte Polyalkylenimine und Formulierungen enthaltend Polyalkylenimine. Ein weiterer Gegenstand der Erfindung ist die Verwendung von Polyalkyleniminen in Anwendungsbereichen, in denen sich eine erhöhte Chlorkonzentration negativ auf die Anwendungseigenschaften auswirkt.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils konkret angegebenen Kombination, sondern auch in anderen Kombinationen verwendbar sind, ohne den Rahmen der Erfindung zu verlassen. Bevorzugt bzw. ganz bevorzugt sind die Ausführungsformen der vorliegenden Erfindung in denen alle Merkmale die bevorzugten bzw. ganz bevorzugten Bedeutungen haben.

Es ist schon lange bekannt, wasserlösliches Polyethylenimin aus Ethylenimin herzustellen und beispielsweise in der Papierherstellung einzusetzen.

US 2,182, 306 beschreibt die Polymerisation von Ethylenimin in Gegenwart von Katalysatoren.

In der US 3,203,910 werden polyhalogenierte Initiatoren zur Herstellung von Polyalkyleniminen beschrieben.

Die Umsetzung von Ethylenimin kann, wie beispielsweise in der DE 1 169 131 beschrieben, auch in Gegenwart von anderen Stoffen wie Harnstoff, Phenylisocyanat oder Diethylcarbonat erfolgen. Eine Umsetzung in Gegenwart von Aminen führt in der Regel zur Herstellung von Polyethylenpolyaminen.

Die DE 195 45 874 A1 beschreibt Verfahren zur kontinuierlichen Herstellung von Homopolymerisaten des Ethylenimins durch Polymerisieren von Ethylenimin in einem Lösemittel in Gegenwart von Katalysatoren bei Temperaturen von mindestens 80°C. Als Katalysatoren werden sauer reagierende Stoffe, Brönsted Säuren wie Mineralsäuren, organische Säuren oder LewisSäuren genannt.

DE 101 11 776 B4 betrifft ein Verfahren zur Herstellung von wäßrigen Ethyleniminpolymerlösungen, wobei Ethylenimin in einem wäßrigen Medium bei einer Temperatur von weniger als 80°C polymerisiert wird und anschließend bei einer Temperatur von 100 bis 150°C einen Reifeprozeß durchläuft.

Die WO 97/40088 A1 und WO 98/02482 A1 beschreiben Verfahren zur Herstellung von feinteiligen, wasserunlöslichen Polymerisaten von Aziridinen durch Polymerisieren von Aziridinen in Gegenwart von mindestens zwei funktionelle Gruppen enthaltenden Vernetzern in einem inerten Lösemittel. Diese Polymerisate finden Verwendung bei der Immobilisierung von Wirkstoffen, als Absorptionsmittel für Aldehyde, Ketone und Säuren sowie zur Entfernung von Schwermetallionen aus Abwässern.

In der DE 10 205 050 201 B3 wird die Herstellung von halogenidarmen wässrigen Lösungen von Polymeren, die durch Protonierung oder Quarternierung kationische Aminogruppen aufweisen beschrieben. Die Wirkung solcher kationischen Polymere beruht darauf, dass die positiven Ladungen in den Polymermolekülen mit negativen Oberflächenladungen der suspendierten oder emulgierten Teilchen wechselwirken.

Die aus dem oben genannten Stand der Technik bekannten Polyalkylenimine weisen häufig breite Molekulargewichtsverteilungen auf, die sich bei bestimmten Anwendungen negativ auf die Anwendungseigenschaften der Polymere auswirken können. Beispielsweise zeigen Polyalkylenimine mit engeren Molekulargewichtsverteilungen in der Regel verbesserte Dispergiereigenschaften für Pigmente.

Häufig werden die aus dem Stand der Technik bekannten Polyalkylenimine unter Verwendung von cholridhaltigen Initiatoren oder Katalysatoren hergestellt. Die hierbei erhaltenen Polymere enthalten relativ hohe Mengen an Chlorid, welches im technischen Einsatz negative Auswirkungen auf die jeweilige Anwendung haben kann. Beispielsweise werden Polyethylenimine als Korrosionsinhibitoren eingesetzt, wobei eine erhöhte Salzfracht an Chloriden jedoch dazu führt, dass verstärkt unerwünschter Lochfraß auftritt. Weiterhin können Polyalkylenimine mit hohem Chloridgehalt beispielsweise nicht in Anwendungen eingesetzt werden bei denen hohe thermische Belastungen auftreten. Bei einer Verwendung solcher stark chloridhaltiger Polyalkylenimine als beispielsweise Dispergatoren von Ruß in Motorölen können unter hoher thermischer Belastung toxische Verbindungen wie z.B. Dioxine entstehen.

Aufgabe der vorliegenden Erfindung war es daher, Verfahren zur Herstellung von Polyalkylenpolyiminen, insbesondere Polyethyleniminen zu finden, die zu einer engen Molekulargewichtsverteilung führen. Eine weitere Aufgabe der vorliegenden Erfindung war es Polyalkylenimine, insbesondere Polyethylenimine bereitzustellen, die einen geringen Anteil an chlorhaltigen Verunreinigungen enthalten.

Gelöst werden diese Aufgaben durch ein Verfahren zur Herstellung von Polyalkyleniminen aus Alkyleniminen, in Gegenwart

a. eines flüssigen Lösungsmittels und
b. eines Katalysators,
wobei die Herstellung halb-diskontinuierlich, bevorzugt batchweise, in einem Reaktionsbehälter erfolgt.

Im Rahmen der vorliegenden Erfindung ist unter einer halb-diskontinuierlichen Herstellung zu verstehen, dass der Herstellungsprozess nach der Befüllung des Reaktionsbehälters mit einer Vorlage, z.B. aus Wasser, einem Amin und einem Starter oder Katalysator durch Zudosieren von Alkyleniminen, z.B. Aziridin gestartet wird und entweder nach Erreichen einer bestimmten Reaktionszeit, bevorzugt von 5 bis 30 h oder eines bestimmten Umsatzes des Alkylenimins, bevorzugt über 99% Umsatz des Alkylenimins vollständig abgebrochen wird. Im Gegensatz zu einem kontinuierlichen Verfahren werden keine weiteren Edukte zugesetzt, um die Umsetzung aufrecht zu erhalten und es wird nicht nur ein Teil des Reaktionsgemisches abgetrennt. Nach dem Abbruch der Umsetzung wird gegebenenfalls das Produkt gereinigt, insbesondere flüssiges Lösungsmittel und/oder Katalysator teilweise oder vollständig abgetrennt, um die Polyalkylenimine zu erhalten. Bevorzugt erfolgt also die Herstellung der Polyalkylenimine batchweise, d.h. in einzelnen Chargen. Ein Vorteil der halb-diskontinuierlichen Herstellung ist, dass sich die Molekulargewichtsverteilung der Polyalkylenimine gegenüber einer kontinuierlichen Fahrweise besser kontrollieren lässt und in der Regel enger verteilte Polymere erhalten werden.

Im Rahmen des erfindungsgemäßen Verfahrens lassen sich, je nach gewünschtem Anwendungsgebiet der Polyalkylenimine, eine große Zahl verschiedener Alkylenimine einsetzen. Bevorzugt werden als Alkylenimine Ethylenimin, 2-Methylaziridin, 1-(2-Hxdroxyethyl)aziridin, 1-(2-Aminoethyl)aziridin eingesetzt. Als Alkylenimine lassen sich selbstverständlich auch die Mischungen verschiedener Alkylenimine einsetzen. Somit werden gemäß dem erfindungsgemäßen Verfahren sowohl Homopolyalkylenimine als auch Copolymere der Alkylenimine erhalten. Bevorzugt werden nach dem erfindungsgemäßen Verfahren Polyethylenimine erhalten.

Flüssige Lösungsmittel (a.) liegen in der Regel bei einem Druck von 1 bar bis 2 bar in einem Temperaturbereich von 80 bis 120 °C, bevorzugt von 85 bis 105 °C als Flüssigkeiten vor. Selbstverständlich können auch Mischungen von Lösungsmitteln als flüssige Lösungsmittel (a.) eingesetzt werden. In der Regel werden als Lösungsmittel inerte Kohlenwasserstoffe oder polare Lösungsmittel wie Alkohole oder Wasser eingesetzt.

Bevorzugt wird als flüssiges Lösungsmittel ein wässriges Lösungsmittel eingesetzt. Das wässrige Lösungsmittel kann als weitere Lösungsmittel-Komponenten neben Wasser auch Alkohole und oder Amine enthalten. Das wässrige Lösungsmittel enthält mindestens 35 Gew.-% Wasser bezogen auf die Gesamtmenge aller weiteren Lösungsmittel-Komponenten und Wasser. Bevorzugt sind im wässrigen Lösungsmittel mindestens 60 Gew.-%, besonders bevorzugt mindestens 70 Gew.-%, ganz besonders bevorzugt mindestens 80 Gew.-% und insbesondere mindestens 90 Gew.-% Wasser enthalten. Ganz besonders bevorzugt wird als flüssiges Lösungsmittel Wasser eingesetzt.

Als Katalysatoren (b.) werden bevorzugt Säuren oder saure Verbindungen eingesetzt. In der Regel handelt es sich bei den Säuren oder sauren Verbindungen um Brönsted oder Lewissäuren. Bevorzugt bilden sich durch Reaktion des Katalysators mit Wasser Brönstedsäuren, die ganz oder teilweise nach erfolgter Umsetzung einfach aus dem Reaktionsgemisch zu entfernen sind. Beispielsweise handelt es sich bei dem Katalysator (b.) um Schwefelsäure, Methansulfonsäure, Dichlorethan, Butylchlorid, Ameisensäure, Essigsäure, Kohlendioxid. Bevorzugt sind Ameisensäure und Kohlendioxid. Ganz besonders bevorzugt ist Kohlendioxid, das in Kontakt mit Wasser Kohlensäure bildet und nach der Umsetzung einfach aus dem Reaktionsgemisch entfernt werden kann.

In einer weiteren Ausführungsform des erfindungsgemäßen Verfahrens erfolgt die Umsetzung der Alkylenimine zu Polyalkyleniminen

c. optional in Gegenwart von weiteren Additiven.

Als weitere Additive c. kommen beispielsweise Primer, z.B. Amine oder Comonomere in Frage. Bevorzugt werden Methylamin, Dimethylamin, Ethylamin, Diethylamin, Proylamin, Ethylendiamin, Diethylentriamin, Triethylentetramin oder 3,3-Dimethylaminpropylamin, insbesondere Ethylendiamin als Primer eingesetzt.

In einer bevorzugten Ausführungsform des erfindungsgemäßen Verfahrens enthalten weder das flüssige Lösungsmittel (a.), der Katalysator (b.), noch die optionalen Additive (c.) chlorhaltige Verbindungen. Besonders bevorzugt ist eine Ausführungsform des erfindungsgemäßen Verfahrens bei der keinerlei chlorhaltige Verbindungen bei der Umsetzung zugegen sind und somit die Herstellung ohne die Gegenwart von chlorhaltigen Verbindungen erfolgt.

Das erfindungsgemäße Verfahren wird in Reaktionsbehältern durchgeführt, die dem Fachmann aus dem Stand der Technik vertraut sind. Hierzu wird beispielsweise in einem Reaktionsbehälter das Lösungsmittel, z.B. Wasser vorgelegt und optional mit einem Additiv, z.B. einem Primer wie Ethylendiamin versetzt. Nach Zugabe des Katalysators z.B. einer Säure wie Ameisensäure oder Kohlendioxid wird das Gemisch auf die gewünschte Reaktionstemperatur, bevorzugt zwischen 85 und 105°C erwärmt und mit der Zudosierung des Alkylenimins, z.B. Ethylenimin begonnen. Der Reaktionsdruck liegt hierbei in der Regel zwischen 1 und 2 bar. Alternativ kann der Katalysator, z.B. die Säure als Starter auch parallel zum Alkylenimin zudosiert werden. Nach Ende der Alkyleniminzugabe kann das Gemisch zur Vervollständigung der Polymerisationsreaktion und Abbau des restlichen Alkylenimins auf Temperaturen zwischen 120 und 180°C erwärmt werden, entsprechend steigt in der Regel der Reaktionsdruck auf 2 bis 8 bar.

In einer bevorzugten Ausführungsform des erfindungsgemäßen Verfahrens wird Kohlendioxid als Katalysator eingesetzt, wobei das Kohlendioxid im Reaktionsbehälter unter die Flüssigkeitsoberfläche des flüssigen, bevorzugt wässrigen Lösungsmittels eingeleitet wird.

Ein weiterer Gegenstand der Erfindung sind Polyalkylenimine, insbesondere Polyethylenimine, die nach dem erfindungsgemäßen Verfahren hergestellt werden. Bevorzugt handelt es sich hierbei um Polyalkylenimine, insbesondere Polyethylenimine, bei denen die Molmassenverteilung (Molekulargewichtsverteilung) ein Zahlenmittel $M_n$ von 300 bis 500000 g/mol, bevorzugt von 500 bis 50000 g/mol, besonders bevorzugt von 600 bis 20000 g/mol, insbesondere von 1000 bis 15000 g/mol und eine Polydispersität ($M_w/M_n$ mit $M_w$: Gewichtsmittel) von 1,3 bis 5, bevorzugt von 1,3 bis 2, besonders bevorzugt von 1,4 bis 1,6 aufweist.

Weiterhin bevorzugt sind erfindungsgemäß hergestellte Polyalkylenimine, insbesondere Polyethylenimine, die einen Verzweigungsgrad (DB) von mehr als 50, bevorzugt von mehr als 60 aufweisen. Die Polyalkylenimine lassen sich über ihren Verzweigungsgrad ("Degree of Branching", DB) charakterisieren. Zur Definition des "Degree of Branching" wird auf H. Frey et al., Acta Polym. 1997, 48, 30 verwiesen. Der Verzweigungsgrad DB ist dabei definiert als

$$DB (\%) = (T + Z) / (T + Z + L) \times 100,$$

mit

T    mittlere Anzahl der terminal gebundenen Monomereinheiten (primäre Aminogruppen),

Z    mittlere Anzahl der Verzweigungen bildenden Monomereinheiten (tertiäre Aminogruppen),

L    mittlere Anzahl der linear gebundenen Monomereinheiten (sekundäre Aminogruppen).

Die erfindungsgemäß hergestellten Polyalkylenimine weisen vorzugsweise einen Verzweigungsgrad (DB) von 55 bis 95 %, bevorzugt von 57 bis 90 %, besonders bevorzugt von 60 bis 80 % auf.

In einer bevorzugten Ausführungsform der erfindungsgemäß hergestellten Polyalkylenimine, insbesondere Polyethylenimine, enthalten diese nur eine geringen Anteil an chlorhaltigen Verunreinigungen, wobei der Anteil der chlorhaltigen Verunreinigungen kleiner oder gleich 0,5 Gew.-%, bevorzugt kleiner oder gleich 0,1 Gew.-%, ganz besonders bevorzugt kleiner oder gleich 0,01 Gew.-%, insbesondere kleiner oder gleich 0,001 Gew.-%, insbesondere bevorzugt kleiner oder gleich 0,0001 Gew.-% bezogen auf die Menge an Polyalkylenimin, insbesondere Polyethylenimin beträgt.

Die erfindungsgemäß hergestellten Polyalkylenimine werden häufig als Bestandteile von Formulierungen eingesetzt. Diese erfindungsgemäßen Formulierungen können fest oder flüssig sein. Bevorzugt werden flüssige Formulierungen. Besonders bevorzugt liegen neben den Polyalkyleniminen in den Formulierungen Lösungsmittel vor. Bevorzugt handelt es sich hierbei um wässrige Formulierungen, besonders bevorzugt saure Formulierungen, insbesondere Formulierungen von sauren Reinigungslösungen. Der Anteil an Polyalkyleniminen in der Formulierung beträgt in der Regel von 0,1 bis 10 Gew.-%, bezogen auf die Gesamtmenge der Formulierung. Bevorzugt beträgt der Anteil an Polyalkyleniminen von 0,1 bis 5 Gew.-%, insbesondere von 0,1 bis 2,5 Gew.-%.

Ein weiterer Gegenstand der Erfindung ist die Verwendung der oben beschriebenen erfindungsgemäßen oder erfindungsgemäß hergestellten Polyalkylenimine, insbesondere Polyethylenimine mit nur einem geringen Anteil an chlorhaltigen Verunreinigungen, in Anwendungsbereichen, in denen sich eine erhöhte Chlorkonzentration negativ auf die Anwendungseigenschaften auswirkt.

Bevorzugt sind hierbei Anwendungsbereiche, die im Bereich der Medizintechnik, Druckmittel, Abwasserbehandlung, Oberflächenbehandlung, Kosmetik, Waschmittel, Biotechnologie, Verpackungen, Elektronik, Papier, Bauchemie, Textilien, Chromatographie, Ionentauscher, Ölindustrie, Keramiken, Glass, Membrantechnologie, Katalysatoren, Galvanoanwendungen, Biozide oder Holzschutz liegen.

Besonders bevorzugt ist eine Anwendung als Korrosionsinhibitor, Dispergator, Additiv in Ölen insbesondere Schmier- und Motorölen, zur Formulierung von Pharmaka, Haarpflegemitteln, Duftstoffen und Aromen, zur Herstellung von Genvektoren, zur Funktionalisierung und Modifizierung von Oberflächen in der Galvano- und Medizintechnik oder zur Herstellung von Reinigungssystemen für die Halbleiterindustrie und Lithiumbatterien.

Die vorliegende Erfindung stellt halb-diskontinuierliche Verfahren zur Herstellung von Polyalkyleniminen aus Alkyleniminen zur Verfügung. Die erfindungsgemäß hergestellten oder herstellbaren Polyalkylenimine zeichnen sich durch eine enge Molmassenverteilung aus, die zu einer Verbesserung der Dispegierwirkung führt. Weiterhin weisen die Polyalkylenimine einen verschwindenden Gehalt an bei bestimmten Verwendungen problematischen chloridhaltigen Verunreinigungen auf.

Die Erfindung wird durch die Beispiele näher erläutert, ohne dass die Beispiele den Gegenstand der Erfindung einschränken.

Beispiele:

Beispiel 1: Beispiel einer allgemeinen Herstellungsvorschrift

In ein Reaktionsgefäß werden nacheinander von 0,0 bis 100 g Wasser, 0,01 g bis 20 g Ethylendiamin und 0,01 g bis 30 g Kohlendioxid vorgelegt und auf 80°C bis 120°C erwärmt. Danach erfolgt die Zugabe von 500 g Ethylenimin, ggf. in Wasser gelöst mit einem Gehalt von 99% bis 10% (Gew.-%). Die Zudosierung erfolgt in der Regel über 1 h bis 24 h. Nach einer Nachreaktionszeit von 2 h bis 24 h wird das Reaktionsgemisch auf 120°C bis 180 °C erwärmt. Danach ist die Reaktion beendet und das Ethylenimin zu über 99% umgesetzt.

Durch Behandeln des Reaktionsgemisches unter Vakuum bei Temperaturen zwischen 80°C und 180°C kann das Wasser und ein Teil des Kohlendioxids aus dem Reaktionsgemisch entfernt werden. Der Chloridgehalt liegt unter 10 ppm.

Verwendet man als Starter 6,4 g Butylchlorid, das parallel zum Ethylenimin in den Reaktionsansatzdosiert wird, so kann der Chloridgehalt bis zu 0,46 Gew.-% bezogen auf das Reaktionsgemisch betragen.

Beispiel 2:

Polyethylenimine werden in zahlreichen Anwendungen auch als effiziente Korrosionsinhibitoren eingesetzt. Der positive Effekt auf die Schutzwirkung von Metalloberflächen kann aber gerade durch die Anwesenheit von Chloridverbindungen/Chloridionen kompensiert werden.

So wurde beispielsweise der Flächenabtrag (Flächenkorrosion) von Stahl durch den Zusatz von 0,5 - 2 Gew.-% eines Polyalkylenimins zu einer sauren Reinigungslösung um bis zu 70% reduziert. Die Menge an eingesetztem Polyalkylenimin ist bezogen auf die Menge an saurer Reinigungslösung und Polyalkylenimin.

Die saure Reinigungslösung entspricht einer wässrigen Formulierung bestehend aus 10 Gew.-% Methansulfonsäure, 6 Gew.-% eines nichtionischen Tensids (Lutensol TO12 ; C13-Oxoalkohol + 12 EO), 1,5 Gew.-% des erfindungsgemäß hergestellten (Mn 1.000-25.000, Mw/Mn < 2; Cl-gehalt< 0,01 %) in Wasser (als Rest auf 100 Gew.-%).

Es wurden Vergleichsversuche mit Polyaminen durchgeführt mit einem Cl-Anteil von 2%. Zur Durchführung wurden Metallstreifen (Stahl, Gardobond OC; 0,3x10,5x 19 cmx, Fa. Chemetall) in einen Tauchbehälter gehängt und bei 40°C 30 Minuten belassen.

Anschließend wurde der gravimetrische Abtrag bestimmt, nachdem zuvor alle Bleche tariert wurden.

Zusätzlich wurde in einem elektrochemischen Meßverfahren (Tafelplot, siehe W. Stephen Tait; Introduction to Electrochemical Korrosion Testing for practical Engeneers and Scientists, PairODocs Publication 1994, page 55 ff; ISBN 0-9660207-0-7) der sog. Korrosionsstrom gemessen. Bei diesem Verfahren werden Strom-Spannungskurven bestimmt wobei insbesondere die Lage des OCP (Open Circuit Potential) sowie dessen Verlauf/Konstanz über die Zeit eine Aussage über a) die Passivierung und b) die Beständigkeit des Korrosionsschutzes zulassen. Die Messungen wurden mit einem Potentiostat VFP 600 der Fa. Gamry durchgeführt. Die Messung erfolgte an unbehandelten Stahlblechen (Gardobond OC; 10,5x 19 cm, Fa. Chemetall). Die Messungen erfolgten wässrig in einer 5 Gew.-%igen Lösung von Natriummethansulfonat als Elektrolyt und jeweils unter Zusatz von 2 Gew.-% (bezogen auf die Gesamtformulierung) der Polyalkylenimine (Polyethylenimin, siehe Tabelle 1). Die getrockneten Bleche wurden mit einem Lichtmikroskop bei 100 facher Vergrößerung in Bezug auf die Oberflächenmorphologie, insbesondere Lochfraß untersucht.

Die Ergebnisse aus Tabelle 1 zeigen, dass Polyalkylenimine prinzipiell als Korrosionsinhibitoren zum Schutz gegen azide Medien eingesetzt werden können. Die erfindungsgemäß hergestellten Polyamine verstärken diesen Effekt, indem auch zusätzlich eine hervorragende Prävention gegen Lochfraßbildung aufrecht erhalten werden kann. Der Abtrag erfolgt ausgesprochen gleichmäßig über die Fläche ohne erkennbare Veränderung der Oberflächen-Morphologie. Das spiegelt sich auch im wesentlich flacheren Anstieg (bzw. Abfall zu negativeren Werten) der OCP Werte ab.

Tabelle 1

| Beispiel | Polyethylenimin a)Mw [g/mol] b)Mw/Mn c) Cl [%] | Gravimetrischer Abtrag (40°C, 30 Min.) [mg] | OCP, 3Min. [mV] | OCP, 90 Min [mV] | Oberfläche/Lochfraß |
|---|---|---|---|---|---|
| V1 | 800 1,6 < 0,01 | 42 | -430 | -510 | glatte OF |
| V2 | 750.000 | 54 | -415 | -530 | glatte OF |

(fortgesetzt)

| Beispiel | Polyethylenimin a)Mw [g/mol] b)Mw/Mn c) CI [%] | Gravimetrischer Abtrag (40°C, 30 Min.) [mg] | OCP, 3Min. [mV] | OCP, 90 Min [mV] | Oberfläche/Lochfraß |
|---|---|---|---|---|---|
| | 1,8 < 0,01 | | | | |
| 3 | 5.000 1,6 < 0,01 | 31 | -400 | -489 | glatte OF |
| 4 | 25.000 1,7 < 0,01 | 44 | -392 | -492 | glatte OF |
| 5 | 800 2,6 0,9 | 92 | - 435 | -540 | ca. 30 pitts/cm$^2$ |
| 6 | 5.000 3,1 1,4 | 121 | -410 | -565 | ca. 40 pitts/cm$^2$ |
| 7 | 25.000 3,6 1,4 | 133 | - 422 | - 590 | ca. 40 pitts/cm$^2$ |
| V9 | - ohne | 162 | -590 | -710 | raue OF insgesamt starker Abtrag |

Verwendete man hingegen Polyethylenimine aus einem Herstellverfahren das verfahrensbedingt zu einer Chloridfracht von ca. 1 Gew.-% führte, stellte sich sogenannter Lochfraß ein. Der Lochfraß wird als pitts/cm$^2$ bestimmt.

Lochfraß ist ein besonders ungünstiger bzw. schädlicher Korrosionsmechanismus, der häufig auch bei sehr geringen Anwendungskonzentrationen der Polyethylenimine auftritt.

Mit den Polyalkyleniminen aus dem erfinderischen Verfahren wird Lochfraß nicht mehr beobachtet und der Vorteil eines geringeren Flächenabtrages kann so überhaupt erst in erhöhten Standzeiten von technischen Apparaten abgebildet werden.

Beispiel 3:

Polyethylenimine werden häufig auch als Dispergatoren eingesetzt, beispielsweise als Dispergatoren von Ruß oder nanopartikulären Pigmenten in organischen Medien/Ölen. Im technischen Einsatz dieser Medien treten auch höhere Temperaturen auf (beispielsweise bei Motorölen und Hydraulikflüssigkeiten).

Die Anwesenheit von Chlorid in Gegenwart von organischen Medien ist in diesen Fällen zu vermeiden, da sich toxische Verbindungen wie z.B. Dioxine bilden können. Vor diesem Hintergrund ermöglichen die erfindungsgemäß hergestellten Polyethylenimine den Einsatz als Hochleistungsdispergatoren.

Beispiel 4:

Verwendung zur Vorbehandlung von Stahl für das Verkleben mit Epoxykleber (T-Peel-Test).

Die erfindungsgemäß hergestellten Polyamine werden zum Primern von Stahl- bzw. verzinkten Stahl verwendet um die Haftung beim Verkleben mit Mehrkomponentenklebstoffen zu erhöhen und gleichzeitig die korrosionsinduzierte Unterwanderung bzw. die Enthaftung zu reduzieren.

Hierzu wurden analog der VDA 230-213 Klebetests an Blechstreifen (elo. Verzinkter Stahl ; DC 05) durchgeführt. Die Blechstreifen wurden vor der Verklebung mit einer 1 Gew.-%igen Lösung der Polyamine in Wasser im Sprühverfahren vorbehandelt (10 g der Primerlösung/m$^2$, gefolgt von einem Trockenschritt bei 50°C, 15 Minuten).

Anschließend wurden die Blechstreifen mit dem Epoxykleber der Fa. Dow BETAMATE™ 1496 V behandelt (analog VDA 230-213). Die Aushärtung erfolgte bei 175°C (30 min). Die Streifen wurden im nächsten Schritt mit einer kationischen Tauchlackierung versehen (KTL, Fa. BASF Coatings, Cathoguard 500 Applikation gemäß VDA 230-213).

Anschließend wurden die verklebten Blechstreifen einer Alterung unterzogen durch 10 Runden VDA Wechseltest für Stahlsubstrate gemäß VDA 621-415.

In der T-Peel-Prüfung wird die sog. Winkelschälfestigkeit bestimmt sowie das Bruchbild (cohäsiver bzw. adhäsiver Bruch) bestimmt.

Die in Tabelle 2 aufgelisteten Prüfergebnisse sind Mittelwerte aus jeweils zwei Prüfungen. Die Zugversuche an "ungealterten" Prüfkörpern erfolgt unmittelbar nach der KTL-Beschichtung.

Die Bruchbildanalyse erfolgt optisch durch Bestimmung der Flächenverhältnisse aus kohäsivem Bruch (CF) und adhäsivem Bruch (AF).

Tabelle 2: Mittelwerte der Winkelschälfestigkeiten und Festigkeitsabfälle bzw. Zunahme der gealterten Proben im Vergleich zu ungealterten Proben

| Beispiel | Polyethylenimin a)Mw [g/mol] b)Mw/Mn c) CI [%] | Zugversuch ungealtert [N/mm] | Zugversuch gealtert [N/mm] | Festigkeitsabfall (-)/Zunahme (+) [%] | Bruchbild %CF %AF i.O/n.i.O |
|---|---|---|---|---|---|
| V1 | 800 1,6 < 0,01 | 22,04 | 18,3 | -16,97 | 100 CF i.O. |
| V2 | 750.000 1,8 < 0,01 | 20,85 | 17,35 | -16,79 | 100 CF i.O. |
| 3 | 5.000 1,6 < 0,01 | 21,08 | 17,90 | -15,09 | 100 CF i.O. |
| 4 | 25.000 1,7 < 0,01 | 22,74 | 19,12 | -15,92 | 100 CF i.O. |
| 5 | 800 2,6 0,9 | 21,84 | 14,10 | -35,44 | 70 CF 30 AF n.i.O. |
| 6 | 5.000 3,1 1,4 | 19,43 | 13,82 | -28,87 | 60 CF 40 AF n.i.O. |
| 7 | 25.000 3,6 1,4 | 19,91 | 13,96 | -29,88 | 60 CF 40 AF n.i.O. |
| V9 | - ohne | 17,30 | 13,64 | -21,16 | 60 CF 40 AF n.i.O. |

Die experimentellen Befunde zeigen die haftverstärkende Wirkung von Polyalkyleniminen (ca. +20% vor der Alterung). Nach der Lagerung unter korrosionsfördernden Bedingungen fällt die Haftkraft bei den Versuchen 5-7 drastisch ab - im Prinzip auf das Niveau ohne das Polyalkylenimin. Entsprechend verschlechtert sich auch das Bruchbild mit merklichen Anteilen an adhäsivem Bruch.

Die erfindungsgemäßen Beispiele zeigen den höchsten Zuwachs an Haftkraft vor der Lagerung gepaart mit dem geringsten Abfall nach der Alterung. Entsprechend zeigt sich ein einwandfreies Bruchbild mit 100 % ahesive fracture (Bruch innerhalb der Polymermatrix).

**Patentansprüche**

1. Verfahren zur Herstellung von Polyalkyleniminen aus Alkyleniminen in Gegenwart

   a. eines flüssigen Lösungsmittels und
   b. eines Katalysators,
   **dadurch gekennzeichnet, dass** die Herstellung halb-diskontinuierlich in einem Reaktionsbehälter erfolgt.

2. Verfahren nach Anspruch 1, **dadurch gekennzeichnet, dass** die Herstellung c. in Gegenwart von weiteren Additiven erfolgt.

3. Verfahren nach den Ansprüchen 1 oder 2, **dadurch gekennzeichnet, dass** die Herstellung ohne die Gegenwart von chlorhaltigen Verbindungen erfolgt.

4. Verfahren nach den Ansprüchen 1 bis 3, **dadurch gekennzeichnet, dass** als Alkylenimine Ethylenimin, 2-Methylaziridin, 1-(2-Hxdroxyethyl)aziridin, 1-(2-Aminoethyl)aziridin eingesetzt werden.

5. Verfahren nach den Ansprüchen 1 bis 4, **dadurch gekennzeichnet, dass** als flüssiges Lösungsmittel (a.) wässrige Lösungsmittel eingesetzt werden.

6. Verfahren nach den Ansprüchen 1 bis 5, **dadurch gekennzeichnet, dass** als Katalysator (b.) Säuren oder saure Verbindungen eingesetzt werden.

7. Verfahren nach den Ansprüchen 2 bis 6, **dadurch gekennzeichnet, dass** als Additive (c.) Primer oder Comonomere eingesetzt werden.

8. Verfahren nach Anspruch 7, **dadurch gekennzeichnet, dass** als Primer Methylamin, Dimethylamin, Ethylamin, Diethylamin, Proylamin, Ethylendiamin, Diethylentriamin, Triethylentetramin oder 3,3-Dimethylaminpropylamin eingesetzt werden.

9. Polyalkylenimine hergestellt gemäß den Ansprüchen 1 bis 8.

10. Polyalkylenimine nach Anspruch 9, wobei die Molmassenverteilung ein Zahlenmittel $M_n$ von 300 bis 500000 g/mol und eine Polydispersität von 1,3 bis 5 aufweist.

11. Polyalkylenimine nach Anspruch 9 oder 10, wobei das Polyalkylenimin einen Verzweigungsgrad (DB) von mehr als 50 aufweist.

12. Polyalkylenimine nach den Ansprüchen 9 bis 11, wobei die Polyalkylenimine nur eine geringen Anteil an chlorhaltigen Verunreinigungen enthalten, wobei der Anteil der chlorhaltigen Verunreinigungen kleiner oder gleich 0,5 Gew.-% bezogen auf die Menge an Polyalkyleniminen beträgt.

13. Formulierungen enthaltend Polyalkylenimine gemäß den Ansprüchen 9 bis 12.

14. Verwendung von Polyalkyleniminen gemäß Anspruch 12 oder Formulierungen gemäß Anspruch 13 in Anwendungsbereichen, in denen sich eine erhöhte Chlorkonzentration negativ auf die Anwendungseigenschaften auswirkt.

15. Verwendung nach Anspruch 14, wobei die Anwendungsbereiche im Bereich der Medizintechnik, Druckmittel, Abwasserbehandlung, Oberflächenbehandlung, Kosmetik, Waschmittel, Biotechnologie, Verpackungen, Elektronik, Papier, Bauchemie, Textilien, Chromatographie, Ionentauscher, Ölindustrie, Keramiken, Glass, Membrantechnologie, Katalysatoren, Galvanoanwendungen, Biozide oder Holzschutz liegen.

16. Verwendung nach Anspruch 14 oder 15, wobei eine Anwendung als Korrosionsinhibitor, Dispergator, Additiv in Ölen, zur Formulierung von Pharmaka, Haarpflegemitteln, Duftstoffen und Aromen, zur Herstellung von Genvektoren, zur Funktionalisierung und Modifizierung von Oberflächen in der Galvano- und Medizintechnik oder zur Herstellung von Reinigungssystemen für die Halbleiterindustrie und Lithiumbatterien vorliegt.

Europäisches
Patentamt

European
Patent Office

Office européen
des brevets

# EUROPÄISCHER RECHERCHENBERICHT

**Nummer der Anmeldung**

EP 12 19 6731

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 1 459 809 A (INST NEFTECHIMICHESKOGO SINTEZ) 31. Dezember 1976 (1976-12-31) * Ansprüche; Beispiele * ----- | 1-16 | INV. C08G73/02 |
| X | EP 0 001 436 A1 (BASF AG [DE]) 18. April 1979 (1979-04-18) * Ansprüche; Beispiele * ----- | 1-16 | |

**RECHERCHIERTE SACHGEBIETE (IPC)**

C08G

Der vorliegende Recherchenbericht wurde für alle Patentansprüche erstellt

| Recherchenort | Abschlußdatum der Recherche | Prüfer |
|---|---|---|
| München | 17. April 2013 | West, Nuki |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 12 19 6731

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-04-2013

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| GB 1459809 | A | | 31-12-1976 | KEINE | | | |
| EP 0001436 | A1 | | 18-04-1979 | AU | 521750 | B2 | 29-04-1982 |
| | | | | AU | 4045178 | A | 17-04-1980 |
| | | | | CA | 1105058 | A1 | 14-07-1981 |
| | | | | DE | 2744982 | A1 | 19-04-1979 |
| | | | | EP | 0001436 | A1 | 18-04-1979 |
| | | | | JP | S5462300 | A | 19-05-1979 |
| | | | | US | 4324724 | A | 13-04-1982 |
| | | | | ZA | 7805635 | A | 31-10-1979 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 2182306 A
- US 3203910 A
- DE 1169131
- DE 19545874 A1
- DE 10111776 B4
- WO 9740088 A1
- WO 9802482 A1
- DE 10205050201 B3

### In der Beschreibung aufgeführte Nicht-Patentliteratur

- **W. STEPHEN TAIT.** Introduction to Electrochemical Korrosion Testing for practical Engeneers and Scientists. *PairODocs Publication 1994,* 1994, ISBN 0-9660207-0-7, 55 ff